# EUROPEAN PATENT SPECIFICATION

(11) **EP 1 241 378 B1**
(45) Date of publication and mention of the grant of the patent: **26.10.2005**
(21) Application number: 02002178.8
(22) Date of filing: 29.01.2002
(51) Int. Cl.: F16G 3/00

(54) **Transfer belt**
Transferband
Courroie de transfert

(30) Priority: 15.03.2001 JP 2001074292
(43) Date of publication of application: 18.09.2002
(73) Proprietor: ICHIKAWA CO.,LTD., Tokyo (JP)
(72) Inventor: Takeuchi,Tetsuo c/o Ichikawa Co.,LTD., Tokyo (JP); Tanaka,Yasuhiro c/o Ichikawa Co.,LTD., Tokyo (JP)
(74) Representative: Meddle, Alan L.

(56) References cited:
- GB-A- 776 509
- US-A- 4 944 716

## Description

### FIELD OF THE INVENTION

This invention relates to a transfer belt, and especially to a transfer belt for transporting molded articles at high temperature from one processing stage to another.

### BACKGROUND OF THE INVENTION

In general, in the process of manufacturing molded articles, where high temperatures are encountered, for example in the molding of articles of aluminum, it is necessary to take the high temperatures into account when transferring the articles through successive processing stages. For example, aluminum extrusions are usually at a high temperature, around 550° -600°C, as they emerge from an extruding die. As the extrusions cool, they are transferred to a subsequent processing stage on initial tables, runout tables, transfer tables, cooling tables, stretcher tables and the like.

The tables are conventionally transported by attachment chains or pulleys. However, in both cases, transfer belts are used to transport the molded articles. The transfer belt is typically a flat belt comprising a base member which consists of a plurality of canvas layers, woven of spun polyester filaments or the like, held together by an adhesive, and a needle punched, non-woven fabric of heat-resistant thermoplastic fibers. The base member and the needle-punched, heat-resistant thermoplastic layer are held together by a thermoplastic resin.

To improve the heat-resistance of a transfer belt, Japanese Utility Model Registration No. 2567268 teaches the use of a transfer belt comprising a woven, multifilament fabric or the like as a base member, and a heat-resistant fibrous layer accumulated on the upper surface of the base member, or on the upper and lower surfaces of the base member, and made integral with the base member by needle punching.

Joining devices, such as clips, are provided at opposite ends of the flat transfer belt so that the ends can be joined together to form an endless belt in the form of a loop that can be mounted on rolls and used as a transfer belt.

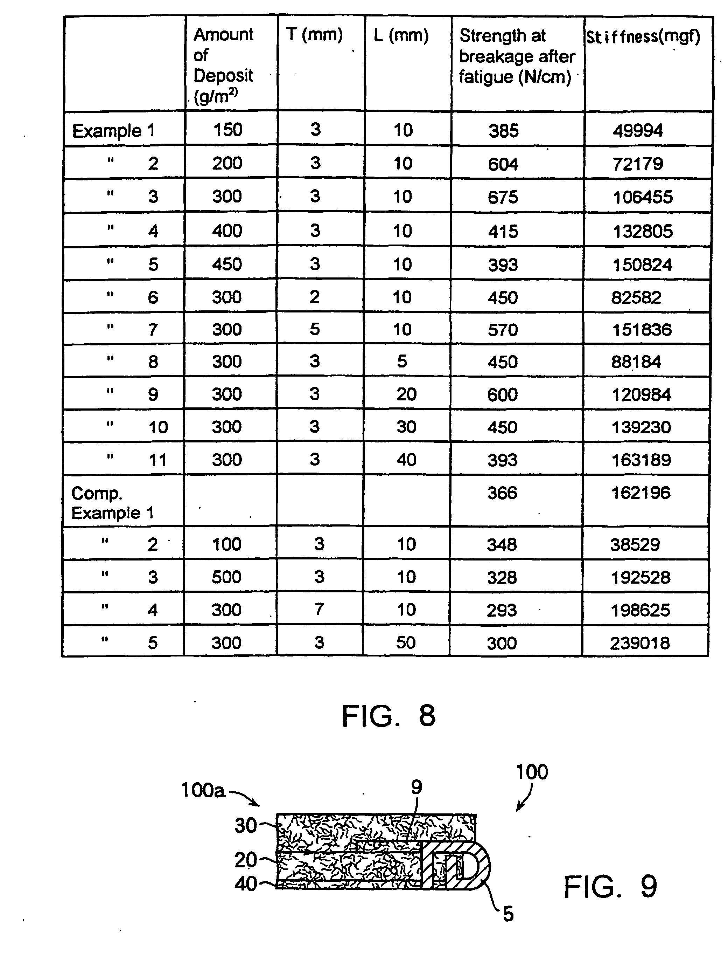

Where the joining devices are directly installed on the base member, a longitudinal load exerted on the belt can cause the weft of the base member to loosen, with the result that the joining devices can become disengaged from the base member, resulting in failure of the belt. Therefore, it has been conventional practice to adopt the measures depicted in FIG. 9, which shows a flat belt 100a consisting of a base member 20, an obverse side fibrous layer 30, and a back, or reverse side, fibrous layer 40. A reinforcing cloth 9 is bonded to the base member 20 with a thermoplastic resin such as thermoplastic urethane resin. The reinforcing cloth 9 comprises a woven fabric composed of high strength fibers such as aramid fibers, impregnated with a thermoplastic resin, for example, a thermoplastic urethane resin. The joining device 5 is installed on the thus reinforced part of the base member.

Since the softened aluminum immediately following extrusion is at a high temperature, of about 550°C - 600°C, the temperature inside the transfer belt may rise to 100° C or more when a hot aluminum article is placed on the transfer belt. Therefore, in case of the transfer belt 100 in FIG. 9, in which a reinforcing cloth 9 is utilized, it is likely that the thermoplastic resin bonding the base member 20 and the reinforcing cloth 9 will deteriorate due to the heat, causing the reinforcing cloth 9 to separate from the base member. When this occurs, the joining device 5 is likely disengage from the reinforcing cloth 9 and the weft of the base member 20, resulting in the breakage of the transfer belt 100.

Because the endless belt runs in a curved path, some bending fatigue is also unavoidable. Greater stiffness of the transfer belt, results in a greater tendency toward bending fatigue. Moreover, if the reinforcing cloth 9 of the transfer belt 100 is bonded to the part of the joining device 5 that extends into the belt, the stiffness of the reinforcing cloth also rises. Thus, it is likely that the reinforcing cloth 9 and the base member 20 will eventually flake off, or that either the reinforcing cloth 9 or the base member 20 will be broken due to the bending fatigue.

US 4944716 discloses a wire netting belt the ends of which are joined together by the use of interlocking eyelets through which a bar is placed. The belt is reinforced in its end regions with reinforcing strips to prevent the belt bending more in the middle than at its edges when under a load.

### SUMMARY OF THE INVENTION

The invention addresses the aforementioned problems in a transfer belt comprising a flat belt and joining means mounted on the respective ends of the flat belt for joining said ends of the belt, by a construction wherein a part of each the joining means is embedded in a part of the flat belt which is impregnated or infiltrated with resin, and thereby reinforced. Preferably, the reinforced part of the flat belt has a depth of in the range from 2mm to 5mm from the back of the flat belt, and extends from an end of the flat belt through a distance in the range from 5mm to 40mm, measured from said end in the longitudinal direction of the belt. Preferably the amount of resin per unit area of the reinforced part of the flat belt is in the range from 150g/m² to 450g/m². The reinforcing resin is preferably selected from the group of thermosetting resins comprising epoxy, phenolic, melamine, unsaturated ester and urea resins. However, the resin may comprise a thermoplastic resin.

With this invention, it is possible to reinforce the ends of flat belts without using a reinforcing cloth or the like for the purpose of installing joining clips. Consequently, the stiffness of the flat belt at the reinforced part may be reduced and the bending fatigue suppressed.

According to one aspect of the present invention a transfer belt is provided comprising a flat belt and joining means mounted on the respective ends of said flat belt for joining said ends of the belt, wherein a part of each said joining means is embedded in a part of the flat belt impregnated or infiltrated with resin, thereby reinforced, characterised in that said flat belt comprises an obverse fibrous layer, a base member and a reverse fibrous layer; and said obverse fibrous layer is sliced along the surface of the base member at both ends of the flat belt, said joining means is secured to said base member, and said base member is reinforced by the resin such that the joining means engages with the reinforced part of the base member.

Conveniently, the reinforced part of the flat belt has a depth in the range from 2mm to 5mm from the back of said flat belt.

Advantageously, the amount of resin per unit area of the reinforced part of the flat belt is in the range of 150g/m² to 450g/m².

Preferably, each said reinforced part extends from an end of said belt through a distance in the range from 5mm to 50 mm, measured from said end in the longitudinal direction of the belt.

Advantageously, said resin is selected from the group of thermosetting resins comprising epoxy, phenolic, melamine, unsaturated ester and urea resins.

Conveniently, said resin comprises a thermoplastic resin.

### BRIEF DESCRIPTION OF DRAWINGS

FIG. 1 is a sectional view illustrating a first embodiment of a transfer belt in accordance with the invention, in which the ends of the belt are not yet connected;

FIG. 2 is a sectional view illustrating the a transfer belt in which the ends of the belt are connected to each other by joining devices installed at both ends of the belt, and a connecting line is inserted through interleaved loops of the joining devices to provide an endless belt;

FIG. 3 is a sectional view of a transfer belt having a flap;

FIG. 4 is an enlarged sectional view of an edge of a transfer belt, illustrating the extent of impregnation of a resin layer in the reinforcing part of the belt;

FIG. 5 is another enlarged sectional view of an edge of a transfer belt having no obverse fibrous layer, illustrating the extent of impregnation of a resin layer in the reinforcing part of the belt;

FIG. 6 is still another enlarged sectional view of an edge of a transfer belt showing the extent of impregnation of a resin layer, where the resin layer extends from the back face of the belt to beyond the opposite surface of the base member;

FIG. 7 is a schematic view of an S-shaped winding test machine for evaluating bending fatigue;

FIG. 8 is a table showing the results of several examples and comparative examples, discussed in the following detailed description; and

FIG. 9 is a sectional view showing a connecting part of a conventional transfer belt.

### DETAILED DESCRIPTION OF THE PREFERRED EMBODIMENTS

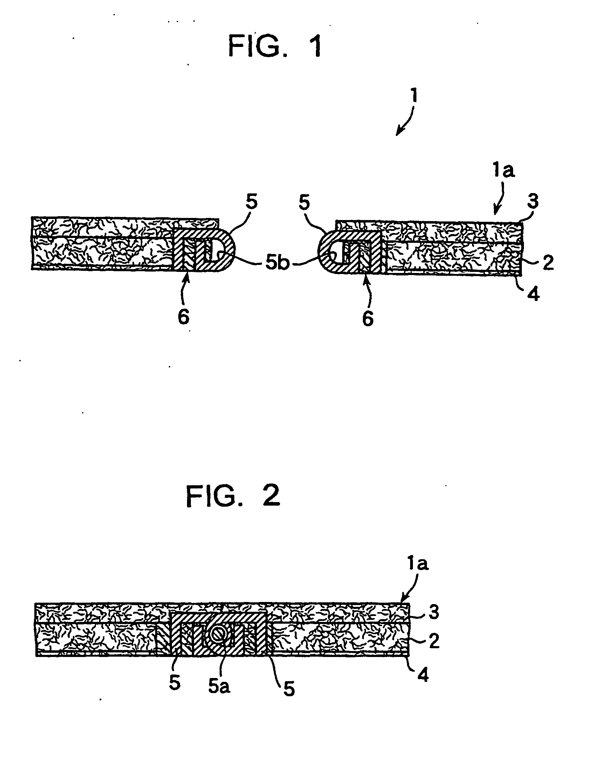

The transfer belt of the invention will now be explained referring to the drawings. In the transfer belt 1, shown in section in FIG. 1, the ends of the belt 1 are shown opposed to each other, but not yet connected.
Fastened to each end is a joining device 5, in the form of a set of loops 5b, similar to the knuckles of a hinge. The loops of the respective joining devices 5 interleave with each other as shown in FIG. 2, and an elongated connector 5a may be inserted into the loops 5b, 5b to join the ends of the belt together to form an endless belt.

The transfer belt 1 comprises a base member 2 formed of a woven fabric of a heat-resistant or universal fiber or a fibrous web of heat-resistant or universal fiber, an obverse surface fiber layer 3, of accumulated heat-resistant fiber, and a back or reverse fibrous layer 4.

The base member 2 may take the form of two or more woven fabrics accumulated and made integral by intertwining. The woven fabrics will not flake off easily if a fibrous layer is sandwiched between them. However, a woven fabric can also be accumulated without a fibrous layer, with similar results.

The base member 2, obverse surface fiber layer 3, and reverse fibrous layer 4 are needle punched to make an integral flat belt 1a.

The transfer belt 1 of the invention is made by first slicing the obverse fibrous layer 3 at both ends of the flat belt 1a along the surface of the base member 2, separating the ends of the fibrous layer 3 from the base member. With the end portions of the base members exposed joining means, such as clips 5 are secured to the base members. This may be accomplished in the case of clips 5 by bending them in such a way as to cause their ends to penetrate the exposed portion of the base member as illustrated in FIGs. 1 and 2. The exposed part of the base member is reinforced with a thermosetting resin so that the clip is engaged with a reinforced part of the base member.

In case of a flat belt comprising a plurality of woven fabrics intertwined with an obverse fibrous layer 3 and a reverse fibrous layer 4, there is a concern that the woven fabric constituting the base member 2 may become separated as result of the slicing operation carried out in order to attach the joining clips. For this reason, it is desirable that the surface of the base member 2 not be totally exposed. The avoidance of exposure of the surface of the base member 2 is achieved by slicing the fibrous layer 3 so that a part of the fibrous layer 3 remains on the base member 2.

For the warp of the fabric or fibrous layer which composes the base member 2, it is desirable to utilize fibers of high strength and low elongation, that is fibers having a strength of 10g/d (denier) or more, and a rate of elongation less than 10%, such as, para-aramid fibers, fully aromatic polyesters, PBO (polybenzoxazole) fibers, and glass fibers.

For the weft of the fabric or fibrous layer which composes the base member 2, fibers of high strength and low elongation corresponding to the warp fibers, or universal fibers, such as polyesters and nylons, are preferably used.

In case the base member is composed of a plurality of woven fabrics, with fibrous layers between the woven fabrics, the warp and weft of the woven fabrics maybe chosen from among the aforementioned fibers.

The fibers which compose the obverse fibrous layer 3 and the reverse fibrous layer 4 are desirably heat-resisting fibers such as a meta-aramid fibers, para-aramid fibers, PBO fibers or glass fibers. However, universal fibers such as polyester fibers may be used when the belt is used in a process where a high degree of heat resistance is not required.

Resins such as silicone resin may be impregnated in, or spread onto, the reverse fibrous layer 4 to reinforce the layer 4 with a the object of preventing dropout and wear of fibers.

The joining devices 5 can be any of a variety of available clips, made either of metal or resin, or industrial fasteners or the like. A plurality of loops 5b are formed in each joining device 5. Loops of each joining device fit between loops of the adjoining device in interleaving relationship, and a connector 5a extends through the interleaved loops to secure the joining devices together, in the same manner as in the case of a conventional belt.

The reinforcing resin used for this invention is preferably a thermosetting resin, such as epoxy resin, phenolic resin, melamine resin, unsaturated polyester resin, and urea resin, etc. These thermosetting resins are impregnated in the base member form a reinforced part 6. Alternatively, the resins can be spread onto the base member so that infiltration of resin into the base member takes place, similarly forming a reinforced part 6.

A method of impregnating the base member with thermosetting resin is to apply a solution of thermosetting resin. The solvent may be water or organic solvent depending upon the kind of resin used. The solution is diluted and adjusted in concentration. Alternatively, a flat belt is placed into a tank containing a diluted solution of resin, and then the belt is passed between a pair of rolls so that excess resin is squeezed out.

The amount of resin impregnated into the flat belt may be determined by comparing the amount of resin present before and after impregnation, or by measuring the increase in the weight of the flat belt following impregnation.

When a pair of rolls is used to squeeze excess resin from the belt, the amount of resin squeezed from the belt can be controlled by adjustment of the clearance between the rolls. At least one roll should be made of rubber so that the joining devices do not collapse as they pass between the rolls.

A thermosetting resin may be spread on, and caused to infiltrate into the base member of the belt by spraying onto the base member a solution of thermosetting resin in water or an organic solvent.

The strength of the reinforced part 6 of the belt will increase with increasing amounts of resin impregnated into the belt or deposited thereon, and the strength of the reinforced part will also increase if the area over which the resin is deposited is increased. But, with increasing strength achieved in this manner, an increase in stiffness will generally follow, and the tendency of the belt to fail as a result of bending fatigue will inevitably increase. Therefore, it is important that the amount of resin impregnated into, or deposited on the base member be limited, or that the area over which the resin is deposited be limited, so that the reinforced part of the belt does not become excessively stiff and subject to premature bending fatigue. Control of the stiffness of the reinforced part of the belt will result in a longer service life.

The amount of impregnation or deposition of the thermosetting resin on the base member can be adjusted by adding a thickener such as methylcellulose to adjust the viscosity of the thermosetting resin when diluted with water or organic solvent.

To form a reinforced part in the transfer belt 1 of this invention, a thermoplastic resin may also be used instead of a thermosetting resin where a high degree of heat resistance is not needed, for example where the belt will only be used at ambient temperatures. All kinds thermoplastic resins may be used for reinforcement where heat resistance is not required.

In some cases where the belt is used in an environment where heat resistance is required, thermoplastic resins can be used, but it is necessary to take into account the softening point of the thermoplastic resin, i.e., the temperature at which the resin becomes soft when heated, and to ensure that the temperatures to be encountered by the belt do not exceed the softening point.

A representative method of determining the softening point is the "Vicat" softening point test (ASTM D1525), the softening point being the temperature at which a penetration probe of a predetermined weight penetrates to a predetermined depth into a test resin which is softened by heat.

When a thermoplastic resin having a prescribed softening point is used as the resin in the reinforcing part 6, it can be impregnated into, or spread on and infiltrated into the base member in a manner similar to the manner in which a thermosetting resin is introduced.

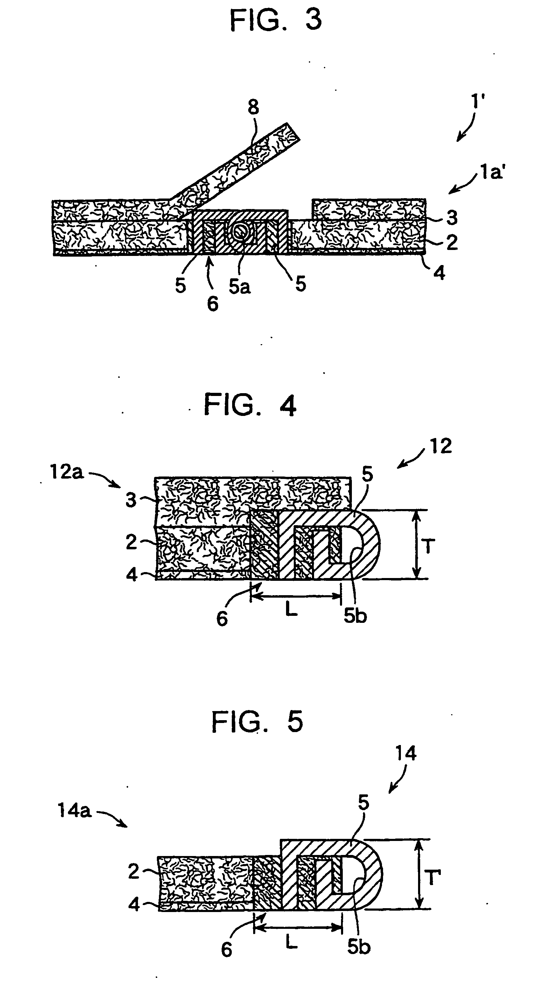

When a molded article softened due to the heat is transported, occasionally the joining devices 5 of the transfer belt 1 will impart markings to the molded article. To prevent the joining devices 5 from marking or damaging the molded article, a flap may be provided to cover the joining devices 5 as shown in FIG. 3. The flap 8 is provided at one of the edges of the belt, and both joining devices 5 are covered by the flap 8 in the transfer belt 1'.

In the edge of the transfer belt 12 shown in section in FIG. 4, resin impregnates the belt to a distance L from the end of the flat belt 12a and to a depth T from the back side of the fibrous layer 4 of the belt.

FIG. 5, which is a sectional view of one edge of a transfer belt 14, depicts the extent of impregnation of the resin in the reinforcing portion. The transfer belt 14 does not have an obverse fibrous layer 3 in the flat belt 14a; it only comprises a base member 2 and a reverse fibrous layer 4. The resin impregnates the base member 2 and fibrous layer 4 to a distance L from the end of the flat belt 14a and extends to the surface of the base member 2, through a depth T' from the back side of the fibrous layer 4.

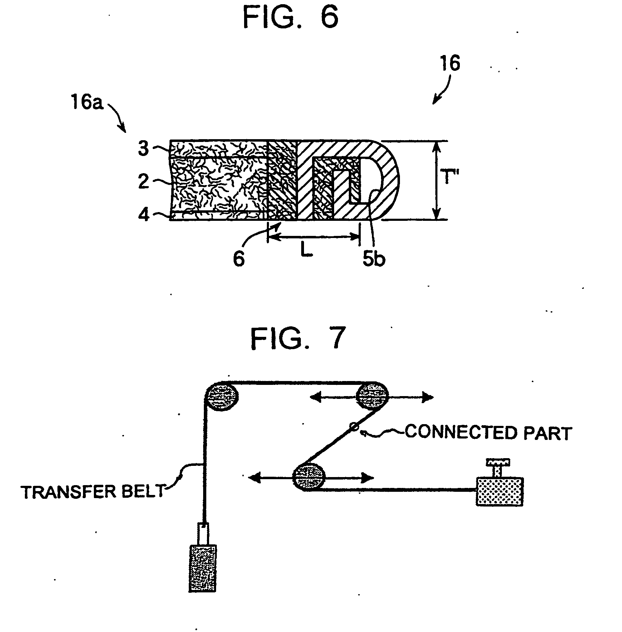

FIG. 6, which is a sectional view of one edge of another transfer belt 16, depicts the extent of impregnation of the resin in the reinforcing portion 6. The resin impregnates the flat belt to a distance L from the end of the belt, and extends from a location close to the upper surface of the base member 2 throughout a depth T'', extending from the back side of the fibrous layer 4 of the belt.

Concrete examples of the transfer belts 1, 1', 12, 14, and 16 will now be explained below. In each example, the diluted resin was spread onto, and impregnated into, a portion of the belt to be reinforced, by means of a brush.

### EXAMPLE 1

The base member was composed of a woven fabric with a warp of Kevlar fiber and polyester fiber as the weft. The fabric had an areal weight of 320g/m². A short fiber layer consisting of half para-aramid fibers and half carbon fibers was accumulated on the base member and integrated by needle punching. A flat belt having a thickness of 10mm and an areal weight of 4000g/m² was obtained.

The edge of this flat belt was sliced from the back to a thickness of 3mm. Metallic joining clips were fixed to the exposed part of the belt. Then, to reinforce the fixing portion of the belt, aqueous epoxy resin diluted with water to have a solids concentration of 7.5% (weight%) was spread by means of a brush onto, and impregnated into, the flat belt through a distance extending 10mm from the edge of the flat belt, with the resultant amount of deposit per unit area being 150g/m². Thereafter, the reinforced portion of the belt was dried for one hour in a hot air stream at 120°C.

### EXAMPLE 2

The same flat belt in EXAMPLE 1 was made, and the edge of the flat belt was sliced from the back to a thickness of 3mm. Metallic joining clips were fixed to the exposed part of the belt. Then, to reinforce the fixing portion of the belt, aqueous epoxy resin diluted with water to have a solids concentration of 10% (weight %) was spread by means of a brush onto, and impregnated into, the flat belt through a distance extending 10mm from the edge of the flat belt, with a resultant amount of deposit per unit area being 200g/m². Thereafter, the reinforced portion was dried for one hour in a hot air stream at 120°C.

### EXAMPLE 3

The same flat belt in EXAMPLE 1 was made, and the edge of the flat belt was sliced from the back to a thickness of 3mm. Metallic joining clips were fixed to the exposed part of the belt. Then, to reinforce the fixing portion of the belt, aqueous epoxy resin diluted with water to have a solids concentration of 15% (weight %) was spread by means of a brush onto, and impregnated into, the flat belt through a distance extending 10mm from the edge of the flat belt, with a resultant amount of deposit per unit area being 300g/m². Thereafter, the reinforced portion was dried for one hour in a hot air stream at 120°C.

### EXAMPLE 4

The same flat belt in EXAMPLE 1 was made, and the edge of the flat belt was sliced from the back to a thickness of 3mm. Metallic joining clips were fixed to the exposed part of the belt. Then, to reinforce the fixing portion of the belt, aqueous epoxy resin diluted with water to have a solids concentration of 20% (weight %) was spread by means of a brush onto, and impregnated into, the flat belt through a distance extending 10mm from the edge of the flat belt, with a resultant amount of deposit per unit area being 400g/m². Thereafter, the reinforced portion was dried for one hour in a hot air stream at 120°C.

### EXAMPLE 5

The same flat belt in EXAMPLE 1 was made, and the edge of the flat belt was sliced from the back to a thickness of 3mm. Metallic joining clips were fixed to the exposed part of the belt. Then, to reinforce the fixing portion of the belt, aqueous epoxy resin diluted with water to have a solids concentration of 22.5% (weight %) was spread by means of a brush onto, and impregnated into, the flat belt through a distance extending 10mm from the edge of the flat belt, with a resultant amount of deposit per unit area being 450g/m². Thereafter, the reinforced portion was dried for one hour in a hot air stream at 120°C.

### EXAMPLE 6

The same flat belt in EXAMPLE 1 was made, and the edge of the flat belt was sliced from the back to a thickness of 2mm. Metallic joining clips were fixed to the exposed part of the belt. Then, to reinforce the fixing portion of the belt, aqueous epoxy resin diluted with water to have a solids concentration of 15% (weight %) was spread by means of a brush onto, and impregnated into, the flat belt through a distance extending 10mm from the edge of the flat belt, with a resultant amount of deposit per unit area being 300g/m². Thereafter, the reinforced portion was dried for one hour in a hot air stream at 120°C.

### EXAMPLE 7

The same flat belt in EXAMPLE 1 was made, and the edge of the flat belt was sliced from the back to a thickness of 5mm. Metallic joining clips were fixed to the exposed part of the belt. Then, to reinforce the fixing portion of the belt, aqueous epoxy resin diluted with water to have a solids concentration of 15% (weight %) was spread by means of a brush onto, and impregnated into, the flat belt through a distance extending 10mm from the edge of the flat belt, with a resultant amount of deposit per unit area being 300g/m². Thereafter, the reinforced portion was dried for one hour in a hot air stream at 120°C.

### EXAMPLE 8

The same flat belt in EXAMPLE 1 was made, and the edge of the flat belt was sliced from the back to a thickness of 3mm. Metallic joining clips were fixed to the exposed part of the belt. Then, to reinforce the fixing portion of the belt, aqueous epoxy resin diluted with water to have a solids concentration of 15% (weight %) was spread by means of a brush onto, and impregnated into, the flat belt through a distance extending 5mm from the edge of the flat belt, with a resultant amount of deposit per unit area being 300g/m². Thereafter, the reinforced portion was dried for one hour in a hot air stream at 120°C.

### EXAMPLE 9

The same flat belt in EXAMPLE 1 was made, and the edge of the flat belt was sliced from the back to a thickness of 3mm. Metallic joining clips were fixed to the exposed part of the belt. Then, to reinforce the fixing portion of the belt, aqueous epoxy resin diluted with water to have a solids concentration of 15% (weight %) was spread by means of a brush onto, and impregnated into, the flat belt through a distance extending 20mm from the edge of the flat belt, with a resultant amount of deposit per unit area being 300g/m². Thereafter, the reinforced portion was dried for one hour in a hot air stream at 120°C.

### EXAMPLE 10

The same flat belt in EXAMPLE 1 was made, and the edge of the flat belt was sliced from the back to a thickness of 3mm. Metallic joining clips were fixed to the exposed part of the belt. Then, to reinforce the fixing portion of the belt, aqueous epoxy resin diluted with water to have a solids concentration of 15% (weight %) was spread by means of a brush onto, and impregnated into, the flat belt through a distance extending 30mm from the edge of the flat belt, with a resultant amount of deposit per unit area being 300g/m². Thereafter, the reinforced portion was dried for one hour in a hot air stream at 120°C.

### EXAMPLE 11

The same flat belt in EXAMPLE 1 was made, and the edge of the flat belt was sliced from the back to a thickness of 3mm. Metallic joining clips were fixed to the exposed part of the belt. Then, to reinforce the fixing portion of the belt, aqueous epoxy resin diluted with water to have a solids concentration of 15% (weight %) was spread by means of a brush onto, and impregnated into, the flat belt through a distance extending 40mm from the edge of the flat belt, with a resultant amount of deposit per unit area being 300g/m². Thereafter, the reinforced portion was dried for one hour in a hot air stream at 120°C.

To compare with the transfer belt of the invention, according to the above examples, the transfer belts were made as comparative examples. Comparative example 1 is one in which the fixing part for the joining device was reinforced with a reinforcing cloth. In comparative examples 2-5, the composition as a whole was the same as that of the invention, but the extent of impregnation of resin into the reinforced part of the belt was varied.

### COMPARATIVE EXAMPLE 1

The base member which is similar to that of EXAMPLE 1, was composed of a woven fabric with the warp of Kevlar fiber and a weft of polyester fiber the fabric having an areal weight of 320g/m². A short fiber layer consisting of half para-aramid fiber and half carbon fibers was accumulated on the base member and integrated by needle punching. A flat belt having a thickness of 10mm and an areal weight of 4000g/m² was obtained. The edge of this flat belt was sliced from the back to a thickness of 3mm.

A woven fabric of aromatic polyamide fiber impregnated with polyurethane adhesive, having a 20% concentration of dissolved solid in an organic solvent, was utilized as a reinforcing cloth. The reinforcing cloth was bonded to the exposed portion of the flat belt with a polyurethane adhesive, and metal joining clips were fastened to the reinforced part.

### COMPARATIVE EXAMPLE 2

The same flat belt as in EXAMPLE 1 was made, and the edge of the flat belt was sliced to a thickness of 3mm from the back. Metal joining clips were fixed to the exposed part of the flat belt. Then, to reinforce the fixing part, aqueous epoxy resin diluted with water to have a solids concentration of only 5% (weight %), was brushed onto the flat belt and impregnated into the belt through a distance of 10mm from the edge of the belt. The resultant deposit per unit area was 100g/m². Thereafter, the reinforced portion was dried for one hour in a hot air stream at 120 °C.

### COMPARATIVE EXAMPLE 3

The same flat belt as in EXAMPLE 1 was made, and the edge of the flat belt was sliced to a thickness of 3mm from the back. Metal joining clips were fixed to the exposed part of the flat belt. Then, to reinforce the fixing part, aqueous epoxy resin diluted with water to have a solids concentration of 25% (weight %), was brushed onto the flat belt and impregnated into the belt through a distance of 10mm from the edge of the belt. The resultant deposit per unit area was 500g/m². Thereafter, the reinforced portion was dried for one hour in a hot air stream at 120 °C.

### COMPARATIVE EXAMPLE 4

The same flat belt as in EXAMPLE 1 was made, and the edge of the flat belt was sliced to a thickness of 7mm from the back. Metal joining clips were fixed to the exposed part of the flat belt. Then, to reinforce the fixing part, aqueous epoxy resin diluted with water to have a solids concentration of 15% (weight %), was brushed onto the flat belt and impregnated into the belt through a distance of 10mm from the edge of the belt. The resultant deposit per unit area was 300g/m². Thereafter, the reinforced portion was dried for one hour in a hot air stream at 120 °C.

### COMPARATIVE EXAMPLE 5

The same flat belt as in EXAMPLE 1 was made, and the edge of the flat belt was sliced to a thickness of 3mm from the back. Metal joining clips were fixed to the exposed part of the flat belt. Then, to reinforce the fixing part, aqueous epoxy resin diluted with water to have a solids concentration of 15% (weight %), was brushed onto the flat belt and impregnated into the belt through a distance of 50mm from the edge of the belt. The resultant deposit per unit area was 300g/m². Thereafter, the reinforced portion was dried for one hour in a hot air stream at 120 °C.

Each transfer belt of the above examples was cut to a width of 10cm, including the connecting part.
Then, the cut portions of the transfer belts were left for 100 hours in an oven heated to 100°C. Thereafter, a 40,000 repetition test was conducted using an S-shaped winding testing machine as shown in FIG. 7. The strength at the connection of the two parts of each belt at the time of breakage was measured using a tensile strength testing machine. The stiffness at the reinforcing part of each belt was also measured using a Gurley's stiffness tester manufactured by Toyo Seiki Co., Ltd. in accordance with the bending repulsion test method A (JIS-L-1096 6.20).

From the measurement results tabulated in FIG. 8, it may be seen that the transfer belts of this invention are superior to the comparative examples in terms of stiffness and bending fatigue.

The measurement results indicate that the amount of deposit per unit area of the resin in the reinforcing part should preferably be in the range of 150-450g/m². The resin layer in the reinforcing part should be in the range of 2-5mm from the back surface, and should be 5-40mm from the edge.

In a transfer belt according to the invention, it is possible to avoid excess stiffness in the reinforcing part in which the joining clips are installed, and consequently, the bending fatigue occurring as an endless transfer belt travels in a curved path over the rolls on which it is mounted can be reduced. As a result, it is possible to prevent breakage of the transfer belt at the location of the connection between its ends, and to improve its service life.

In addition, since the joining means are preferably first installed at the ends of a transfer belt, and then the reinforcing part is impregnated or spread with resin, the manufacturing process of a transfer belt may be simplified, and its manufacturing cost may be reduced.

Particularly good performance, specifically good reduction of bending fatigue while high strength is maintained in the connecting portion of the transfer belt, may be achieved in accordance with the invention by any individual one of the following features or combinations thereof: (a) maintaining the depth of the resin-containing reinforced part of the belt in the range of 2-5mm from the back side of the belt; (b) maintaining the amount of deposit per unit area of the resin in the range of 150-450g/m²; and (c) maintaining the length of the reinforcing part with the resin in the range of 5-40mm from the edge of the belt [0074] Further, improved heat-resistance in the reinforcing part of the belt may be realized by utilizing as the reinforcing resin, a thermosetting resin selected from epoxy, phenolic, melamine, unsaturated polyester or urea resins.

## Claims

1. A transfer belt (1) comprising a flat belt (1a) and joining means (5) mounted on the respective ends of said flat (1a) belt for joining said ends of the belt (1a), wherein a part of each said joining means (5) is embedded in a part (6) of the flat belt (1a) impregnated or infiltrated with resin, thereby reinforced, **characterised in that** said flat belt (1a) comprises an obverse fibrous layer (3), a base member (2) and a reverse fibrous layer (4); and said obverse fibrous layer (3) is sliced along the surface of the base member (2) at both ends of the flat belt (1 a), said joining means (5) is secured to said base member (2), and said base member (2) is reinforced by the resin such that the joining means (5) engages with the reinforced part (6) of the base member (2).

2. A transfer belt (1) according to claim (1), wherein the reinforced part (6) of the flat belt (1a) has a depth in the range from 2mm to 5mm from the back of said flat belt (1 a).

3. A transfer belt (1) according to claim 1 or 2, wherein the amount of resin per unit area of the reinforced part (6) of the flat belt (1a) is in the range of 150g/m² to 450g/m².

4. A transfer belt (1) according to claims 1 to 3, wherein each said reinforced part (6) extends from an end of said belt (1a) through a distance in the range from 5mm to 40mm, measured from said end in the longitudinal direction of the belt (1a).

5. A transfer belt (1) according to claims 1 to 4, wherein said resin is selected from the group of thermosetting resins comprising epoxy, phenolic, melamine, unsaturated ester and urea resins.

6. A transfer belt (1) according to claims 1 to 4, wherein said resin comprises a thermoplastic resin.

## Patentansprüche

1. Transferband (1), das ein flaches Band (1a) und Verbindungsmittel (5) umfaßt, die auf den entsprechenden Enden besagten flachen Bandes (1a) zum Verbinden besagten Enden des Bandes (1a) angebracht sind, wobei ein Teil von jedem besagter Verbindungsmittel (5) in einem Teil (6) des flachen Bandes (1a) eingebettet ist, der mit Harz imprägniert oder infiltriert ist, der **dadurch** verstärkt ist, **dadurch gekennzeichnet, daß** besagtes flache Band (1a) eine oberseitige Faserschicht (3), ein Basisteil (2) und eine rückseitige Faserschicht (4) umfaßt; und besagte oberseitige Faserschicht (3) entlang der Oberfläche des Basisteils (2) an beiden Enden des flachen Bandes (1a) eingeschnitten ist, besagtes Verbindungsmittel (5) an besagtem Basisteil (2) befestigt ist und besagtes Basisteil (2) mit dem Harz verstärkt ist, so daß das Verbindungsteil (5) mit dem verstärkten Teil (6) des Basisteils (2) in Eingriff steht.

2. Transferband (1) nach Anspruch 1, **dadurch gekennzeichnet, daß** der verstärkte Teil (6) des flachen Bandes (1a) eine Tiefe im Bereich von 2 mm bis 5 mm von der Rückseite besagten Bandes (1a) besitzt.

3. Transferband (1) nach Anspruch 1 oder 2, **dadurch gekennzeichnet, daß** die Harzmenge pro Flächeneinheit des verstärkten Teils (6) des flachen Bandes (1a) im Bereich von 150 g/m² bis 450 g/m² liegt.

4. Transferband (1) nach den Ansprüchen 1 bis 3, **dadurch gekennzeichnet, daß** jeder besagte verstärkte Teil (6) sich von einem Ende besagten Bandes (1a) über einen Abstand im Bereich von 5 mm bis 40 mm erstreckt, gemessen von besagtem Ende in der Längsrichtung des Bandes (1a).

5. Transferband (1) nach den Ansprüchen 1 bis 4, **dadurch gekennzeichnet, daß** besagtes Harz ausgewählt ist aus der Gruppe wärmehärtbarer Harze, die Epoxy-, Phenol-, Melamin-, ungesättigte Ester- und Harnstoffharze umfaßt.

6. Transferband (1) nach den Ansprüchen 1 bis 4, **dadurch gekennzeichnet, daß** besagtes Harz ein thermoplastisches Harz umfaßt.

## Revendications

1. Courroie de transfert (1) qui comprend une courroie plate (1a) et des moyens de liaison (5) qui sont montés sur les extrémités respectives de ladite courroie plate (1a) et qui relient lesdites extrémités de la courroie (la), dans laquelle une partie de chacun desdits moyens de liaison (5) est intégrée dans une partie (6) de la courroie plate (1a) imprégnée d'une résine ou infiltrée par cette dernière, ce qui permet de la renforcer, **caractérisé en ce que** ladite courroie plate (1a) comprend au recto une couche fibreuse (3), un élément de base (2) et au verso une couche fibreuse (4), **en ce que** ladite couche fibreuse (3) côté recto est tranchée le long de la surface de l'élément de base (2) aux deux extrémités de la courroie plate (la), lesdits moyens de liaison (5) étant fixés sur ledit élément de base (2), et **en ce que** ledit élément de base (2) est renforcé par la résine de telle sorte que les moyens de liaison (5) engagent la partie renforcée (6) de l'élément de base (2).

2. Courroie de transfert (1) selon la revendication 1, dans laquelle l'épaisseur de la partie renforcée (6) de la courroie plate (1a) est comprise dans la plage de 2 mm à 5 mm depuis le dos de ladite courroie plate (1a).

3. Courroie de transfert (1) selon les revendications 1 ou 2, dans laquelle la quantité de résine par unité de surface de la partie renforcée (6) de la courroie plate (1a) est comprise dans la plage de 150 g/m² à 450 g/m².

4. Courroie de transfert (1) selon les revendications 1 à 3, dans laquelle lesdites parties renforcées (6) s'étendent chacune depuis une extrémité de ladite courroie (1a) sur une distance mesurée depuis ladite extrémité dans la direction longitudinale de la courroie (1a) qui est comprise dans la plage de 5 mm à 40 mm.

5. Courroie de transfert (1) selon les revendications 1 à 4, dans laquelle ladite résine est sélectionnée dans l'ensemble des résines thermodurcissables qui comprend les résines d'époxy, les résines phénoliques, les résines de mélamine, les résines d'esters insaturés et les résines d'urée.

6. Courroie de transfert (1) selon les revendications 1 à 4, dans laquelle ladite résine comprend une résine thermoplastique.
